# DEMANDE DE BREVET EUROPEEN

(11) **EP 1 541 075 A2**
(43) Date de publication de la demande: **15.06.2005**
(21) Numéro de dépôt: 04292861.4
(22) Date de dépôt: 02.12.2004
(51) Int. Cl.: A47J 45/06

(54) **Système de fixation d'une poignée de préhension sur un récipient d'un article culinaire**

(30) Priorité: 12.12.2003 FR 0314571
(71) Demandeur: SEB SA, 69130 Ecully (FR)
(72) Inventeur: Mazin, Cédric, 74540 Alby sur Cheran (FR)
(74) Mandataire: Pichat, Thierry

(57) **Abrégé**

L'invention concerne un système de fixation (3) d'une poignée (2) à un récipient (1), comprenant, d'une part, un élément de fixation (5) adapté à être fixé au récipient (1) et comportant une paroi de butée (7), et, d'autre part, un élément de liaison (6) comprenant une paroi d'appui (8) adaptée à être disposée entre la paroi de butée (7) et le récipient (1), et une cloison (22) dans laquelle est réalisée un orifice (9) adapté à coopérer avec un moyen de serrage (11). Selon l'invention, l'élément de liaison (6) comprend de chaque côté de l'orifice (9), une patte (12) déformable qui s'étend depuis la cloison (22) et qui comporte, à son extrémité libre, un rebord (13) formant paroi d'appui (8), la paroi d'appui (8) et la cloison (22) étant situées de part et d'autre de la paroi de butée (7).

## Description

La présente invention concerne un système de fixation d'une poignée de préhension sur un récipient d'un article culinaire, tel qu'une casserole, une poêle, une sauteuse, un faitout ou autre.

On connaît un tel système de fixation comprenant, d'une part, un élément de fixation adapté à être fixé au récipient et comportant une paroi de butée, et, d'autre part, un élément de liaison comprenant un orifice de serrage adapté à coopérer avec un moyen de serrage permettant le rapprochement et la fixation de la poignée, et une paroi d'appui adaptée à être disposée entre la paroi de butée et le récipient.

Un tel système de fixation est décrit dans le brevet US 4 008 822 dans lequel, d'une part, l'élément de liaison est une plaque qui fait office de paroi d'appui et qui comporte l'orifice adapté à coopérer avec une vis de serrage, et, d'autre part, l'élément de fixation est un pontet en forme de U, dont la paroi de butée, formant la branche centrale du U, comprend une ouverture permettant le passage de la vis pour sa coopération avec l'orifice fileté réalisé dans la paroi d'appui formée par la plaque de liaison.

Toutefois, dans un tel système de fixation, afin d'avoir une fixation fiable de la poignée au récipient, la vis doit traverser, sur une certaine longueur, l'orifice fileté de la plaque de liaison. L'orifice fileté étant disposé entre le récipient et la paroi de butée du pontet, il est nécessaire d'avoir un pontet faisant suffisamment saillie hors du récipient de sorte que la vis ne vienne pas en contact avec ce dernier. De ce fait, le pontet est relativement proéminent et, de façon classique, fait, par rapport au récipient, une saillie d'environ 10 mm.

On connaît également un système de fixation du type comprenant, d'une part, un élément de fixation adapté à être fixé au récipient et comportant une paroi de butée, et, d'autre part, un élément de liaison comprenant une paroi d'appui adaptée à être disposée entre la paroi de butée et le récipient, et une cloison dans laquelle est réalisée un orifice de serrage adapté à coopérer avec un moyen de serrage permettant le rapprochement et la fixation de la poignée au récipient.

Un tel système est décrit dans les deux documents US 2 979 760 et FR 2 683 136 dans lesquels, l'élément de liaison, du fait de sa structure, doit être relié à l'élément de fixation avant la fixation de l'élément de fixation au récipient. De ce fait, c'est l'ensemble formé par l'élément de fixation et l'élément de liaison qui fait saillie.

Dans l'un ou l'autre cas, cette importante proéminence empêche de réaliser un polissage de la surface extérieure du récipient une fois l'élément de fixation fixé, les tampons de polissage utilisés y venant en butée. Aussi, le polissage de la surface extérieure du récipient a lieu avant la fixation de l'élément de fixation, et, une fois cette fixation par soudure réalisée, un nouveau polissage local est réalisé afin de supprimer les éclats de soudure.

Le problème que la présente invention cherche à résoudre est de réaliser un système de fixation permettant de ne réaliser qu'un seul polissage de la surface extérieure du récipient, et donc de réduire les coûts de fabrication des ustensiles culinaires.

Selon l'invention, l'élément de liaison comprend de chaque côté de l'orifice de serrage, une patte déformable qui s'étend depuis la cloison et qui comporte, à son extrémité libre, un rebord recourbé formant paroi d'appui, la paroi d'appui et la cloison étant situées de part et d'autre de la paroi de butée.

Ainsi, du fait que la paroi d'appui est formé par deux rebords recourbés, chaque rebord étant porté par une patte déformable, quand l'élément de fixation est fixé au récipient, l'élément de liaison n'y est pas relié. De plus, comme l'orifice de serrage n'est pas disposé entre le récipient et la paroi de butée, la saillie faite par l'élément de fixation peut être considérablement réduite et correspondre à la somme des épaisseurs de la paroi d'appui et de la paroi de butée (au jeu nécessaire pour l'insertion de la paroi d'appui près), soit environ 3 mm. Cette faible saillie ne gêne pas le mouvement des tampons de polissage et, de ce fait, il est possible de ne réaliser qu'un seul polissage du récipient, une fois la fixation du pontet réalisée.

D'autres avantages et particularités de la présente invention apparaîtront dans la description du mode de réalisation particulier donné à titre d'exemple et illustré par les dessins mis en annexes.
La figure 1 représente une vue en coupe partielle d'un ustensile culinaire au niveau du système de fixation conforme à la présente invention ;
La figure 2 est une vue en perspective d'un élément de fixation conforme à la présente invention ; et
La figure 3 est une vue en coupe d'un élément de liaison conforme à la présente invention, avant toute déformation.

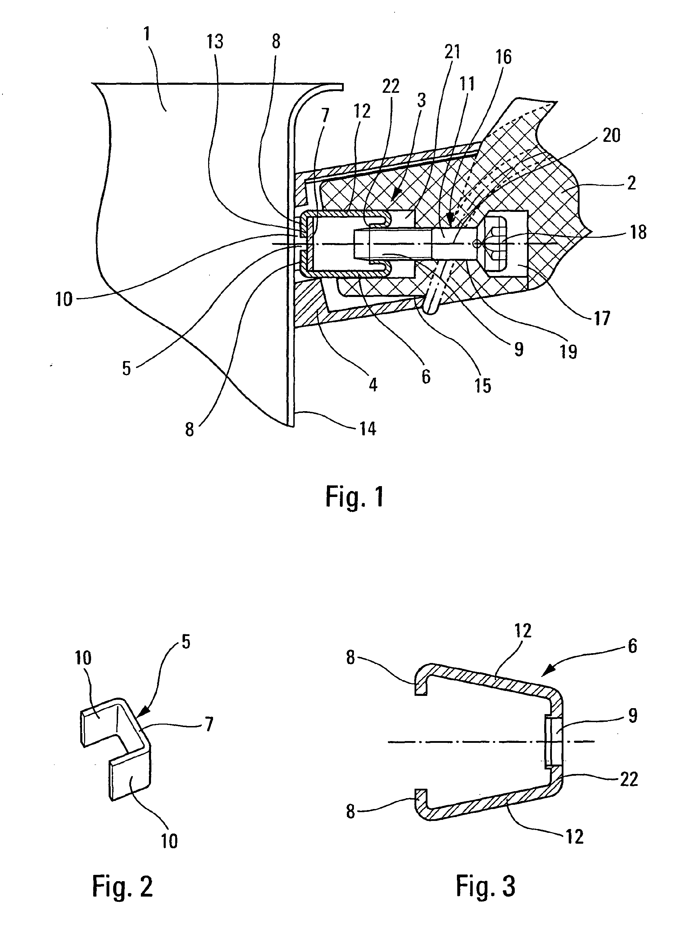

Comme on peut le voir à la figure 1, un article culinaire comprend un récipient 1, une poignée de préhension 2, un système de fixation 3 de la poignée 2 sur le récipient 1, et un pare-flamme 4 permettant de protéger l'extrémité de la poignée 2 proche du récipient 1 des flammes et de cacher l'ensemble du système de fixation 3.

Le système de fixation 3 comprend un élément de fixation 5 et un élément de liaison 6. L'élément de fixation 5 est adapté à être fixé au récipient 1 et comporte une paroi de butée 7. L'élément de liaison 6 comprend, d'une part, une paroi d'appui 8 qui est adaptée à être disposée entre la paroi de butée 7 et le récipient 1, et, d'autre part, un orifice de serrage 9 adapté à coopérer avec un moyen de serrage 11 permettant le rapprochement et la fixation de la poignée 2 au récipient 1 (en l'occurrence, une vis de serrage 11).

Dans le présent exemple, l'élément de fixation 5 est formé par un pontet 5 qui comporte, outre la paroi de butée 7, deux parois latérales 10 qui s'étendent depuis la paroi de butée 7, de sorte que le pontet a la forme générale d'un U. Comme on peut le voir à la figure 1, le pontet 5 est soudé au récipient 1 par les extrémités libres des parois latérales 10.

Comme on peut le voir aux figures 1 et 3, l'orifice de serrage 9 de l'élément de liaison 6 est réalisé dans une cloison 22 qui est distincte de la paroi d'appui 8 de sorte que, quand la paroi d'appui 8 est disposée entre la paroi de butée 7 et le récipient 1, la cloison 22 et la paroi d'appui 8 sont situées de part et d'autre de la paroi de butée 7.

Par ailleurs, afin que la vis 11 traverse l'orifice de serrage 9 sur une certaine longueur, la cloison 22 portant cet orifice 9 est suffisamment éloignée de la paroi d'appui 8.

Dans le présent exemple, l'élément de liaison 6 comporte deux pattes 12. Chaque patte 12 est déformable, s'étend depuis la cloison 22, et comporte, à son extrémité libre un rebord recourbé 13 formant une paroi d'appui 8. Quand une patte 12 est correctement orientée par rapport à la cloison 22, le rebord recourbé 13 correspondant se trouve entre la paroi de butée 7 et le récipient 1. L'élément de liaison 6 forme ainsi une agrafe 6.

Le procédé de fixation de la poignée 2 au récipient 1 est le suivant

Dans un premier temps, le pontet 5 est soudé à la paroi latérale 14 du récipient 1.

Ensuite, une fois l'opération de polissage réalisée, l'agrafe 6 est présentée de sorte que les rebords 13 soient contre ou à proximité immédiate de la paroi latérale 14 du récipient 1, l'écartement entre les deux rebords 13 permettant le passage de la paroi de butée 7.

Par une pression exercée sur les pattes 12, celles-ci sont rapprochées l'une de l'autre, les deux rebords 13 étant alors emprisonnés entre la paroi latérale 14 et la paroi de butée 7. Bien évidemment, lors de cette déformation, l'orifice 9 n'a pas été déformé.

Ainsi, la liaison de l'élément de liaison 6 à l'élément de fixation 5 est un emprisonnement de la paroi d'appui 8 entre le récipient 1 et la paroi de butée 7 par la déformation de l'élément de liaison 6.

Ensuite, le pare-flamme 4 puis la poignée 2 sont approchés de l'agrafe 6, le pare-flamme 4 entourant une première extrémité 15 de la poignée 2.

La vis 11 est alors introduite, à partir d'une ouverture 16 traversant la première extrémité 15 de la poignée 2, dans l'orifice fileté 9 de l'agrafe 6. L'ouverture 16 présente une première partie 17 ayant un certain diamètre permettant le passage de la tête 18 de la vis 11, puis, dans le prolongement, une deuxième partie 19 dont le diamètre correspond sensiblement au cylindre 20 de la vis 11, et enfin, toujours dans le prolongement de la première partie 17, une troisième partie 21 dont le diamètre est supérieur à celui de la deuxième partie 19.

Par effet du vissage, la poignée 2 est rapprochée du récipient 1 et la partie de l'agrafe 6 proche de la cloison 22 pénètre dans la troisième partie 21, resserrant les deux pattes 22 l'une contre l'autre. Le vissage est poursuivi jusqu'à ce que le pare-flamme 4 soit en butée contre la paroi latérale 14 du récipient et la poignée 2.

Par ailleurs, comme on peut parfaitement le voir aux figures, le système de liaison selon le présent mode de réalisation supprime toute pièce du côté de la surface intérieure du récipient, ce qui facilite son nettoyage et confère une meilleure résistance à l'abrasion du revêtement anti-adhésif.

En outre, ce système de fixation permet de compenser automatiquement les jeux longitudinaux (dans la direction longitudinale définie par la poignée) et latéraux (perpendiculairement à la direction longitudinale).

Bien évidemment, le présent mode de réalisation n'est qu'un exemple et de nombreuses modifications peuvent y être apportées.

L'élément de liaison pourrait ainsi ne avoir la forme d'une agrafe comportant deux pattes déformables. L'élément de liaison pourrait aussi ne pas avoir une forme en U.

Le pare-flamme peut être réalisée par moulage ou par frappe. Le pare-flamme peut également être du type filé.

## Revendications

1. Système de fixation (3) d'une poignée de préhension (2) à un récipient (1) d'un article culinaire, comprenant, d'une part, un élément de fixation (5) adapté à être fixé au récipient (1) et comportant une paroi de butée (7), et, d'autre part, un élément de liaison (6) comprenant une paroi d'appui (8) adaptée à être disposée entre la paroi de butée (7) et le récipient (1), et une cloison (22) dans laquelle est réalisée un orifice de serrage (9) adapté à coopérer avec un moyen de serrage (11) permettant le rapprochement et la fixation de la poignée (2) au récipient (1), **caractérisé en ce que** l'élément de liaison (6) comprend de chaque côté de l'orifice de serrage (9), une patte (12) déformable qui s'étend depuis la cloison (22) et qui comporte, à son extrémité libre, un rebord recourbé (13) formant paroi d'appui (8), la paroi d'appui (8) et la cloison (22) étant situées de part et d'autre de la paroi de butée (7).

2. Système de fixation (3) selon la revendication 1, **caractérisé en ce que** l'élément de fixation (5) est formé par un pontet (5) comportant deux parois latérales (10) qui s'étendent depuis la paroi de butée (7) et dont les extrémités libres sont adaptées à être soudées au récipient (1).

3. Système de fixation (3) selon la revendication 1 ou 2, **caractérisé en ce que** le moyen de serrage (11) est une vis de serrage (11).

4. Article culinaire comprenant un système de fixation (3) selon l'une des revendications 1 à 3.

5. Elément de liaison (6) d'un système de fixation (3) d'une poignée de préhension (2) à un récipient (1) d'un article culinaire, comprenant une paroi d'appui (8) et une cloison (22) dans laquelle est réalisé un orifice de serrage (9) adapté à coopérer avec un moyen de serrage (11) permettant le rapprochement et la fixation de la poignée (2) au récipient (1), **caractérisé en ce qu'**il comprend, de chaque côté de l'orifice de serrage (9), une patte (12) déformable qui s'étend depuis la cloison (22) et qui comporte, à son extrémité libre, un rebord recourbé (13) formant paroi d'appui (8), la paroi d'appui étant adaptée à être disposée entre le récipient (1) et une paroi de butée (7) d'un élément de fixation (5) adapté à être fixé au récipient (1), la paroi d'appui (8) et la cloison (22) étant situées de part et d'autre de la paroi de butée (7).

6. Procédé de réalisation d'un article culinaire comprenant un récipient (1) et une poignée (2), comprenant une étape de fixation lors de laquelle un élément de fixation (5) est fixé au récipient (1), et une étape de liaison lors de laquelle un élément de liaison (6) adapté à coopérer avec un moyen de serrage (11) permettant le rapprochement et la fixation de la poignée (2) au récipient (1) est relié à l'élément de fixation (5) par la déformation de l'élément de liaison (6) de façon à emprisonner une paroi d'appui (8) de l'élément de liaison (6) entre le récipient (1) et une paroi de butée (7) de l'élément de fixation (5), **caractérisé en ce que** l'étape de liaison est réalisée après l'étape de fixation.

7. Procédé selon la revendication 6, **caractérisé en ce que** la déformation de l'élément de liaison (6) est constitué par le rapprochement de deux rebords recourbés (13) formant la paroi d'appui (8) et portés par l'extrémité libre de deux pattes (12) qui s'étendent depuis une cloison (22) dans laquelle est réalisée un orifice de serrage (9) adapté à coopérer avec le moyen de serrage (11).

8. Procédé selon la revendication 6 ou 7, **caractérisé en ce qu'**une déformation de l'élément de liaison (6) est réalisée avant le positionnement d'un pare-flamme (4) et de la poignée (2).

9. Procédé selon l'une des revendications 6 à 8, **caractérisé en ce qu'**une déformation de l'élément de liaison (6) est réalisée par le rapprochement de la poignée (2).

10. Procédé selon l'une des revendications 6 à 9 caractérisé ne ce qu'il comprend une unique étape de polissage de la surface extérieure du récipient (1) qui est réalisée entre l'étape de fixation et l'étape de liaison.

11. Procédé de réalisation d'un article culinaire comprenant un récipient (1) et une poignée (2), procédé comportant une étape de polissage de la surface extérieure du récipient (1), une étape de fixation à la surface extérieure du récipient (1) d'un élément de fixation (5) et une étape de liaison d'un élément de liaison (6) à l'élément de fixation (5) permettant la fixation de la poignée (2) au récipient (1), **caractérisé en ce que** toute étape de polissage de la surface extérieure du récipient (1) est réalisée après l'étape de fixation et avant l'étape de liaison.
